# EUROPEAN PATENT APPLICATION

(11) **EP 2 757 737 A1**
(43) Date of publication of application: **23.07.2014**
(21) Application number: 13305041.9
(22) Date of filing: 16.01.2013
(51) Int. Cl.: H04L 9/32

(54) **Method to build public data endorsement structure**

(71) Applicant: Gemalto SA, 92190 Meudon (FR)
(72) Inventor: Detcheverry, Frank, 13705 La Ciotat (FR); Lambert, Patrick, 13705 La Ciotat (FR)

(57) **Abstract**

The present invention relates to a method to build, update and finalize an endorsement structure (ES) including public data (PDAT) linked to sensitive actions to be performed on a system (KMS) authorizing such sensitive actions only if public data are endorsed by physical officers (SO), said method using an external signature secret key (EK).The invention also relates to a corresponding system to implement the method and to an endorsement structure (ES) as obtained with the invention.

## Description

### FIELD OF THE INVENTION

The present invention relates to a method to build a structure adapted to the endorsement of public data by physical persons while insuring the integrity of the endorsed data and the tracking of the successive endorsements. The invention also pertains to a system to implement the method of the invention and to an endorsement structure as obtained, updated and finalized according to a method of the invention.

### BACKGROUND OF THE INVENTION

Today, the use of a certificate that has only been approved by one physical person is commonly observed. It is underlined here that such an approval/endorsement is distinct from an entrustment by a certification authority. Other public data are also commonly useable without specific approval by physical person, this is generally the case for access rights data granted by a system but not approved by any physical person. Indeed, a single trust can result in security issues because a lonely person can perform illicit actions on a system or give rights to another person to perform illicit actions. For example, the display of a web site as trusted could be fraudulently generated.

Security problems also particularly exist in the context of the exportation of secrets using an encryption with a public key. When the corresponding certificate is trusted by only one person, it can lead to security failure.

In the field of key management, it is known to use a Hardware Security Module (HSM in the following) linked to a Key Management System (KMS in the following). Regularly, secret keys are needed to be exported from such HSM.

There is today a real need to collect the approvals of several physical persons about a certificate before using the corresponding public key to transfer such secret keys.

Means for such an approval would, accordingly, be desirable in the art.

### SUMMARY OF THE INVENTION

The present invention aims at providing a method to build a structure enabling an endorsement of public data by several successive officers.

The present invention thus relates to a method to build, update and finalize an endorsement structure including public data linked to sensitive actions to be performed on a system authorizing such sensitive actions only if public data are endorsed by physical officers, said method using an external signature secret key, said method comprising the steps of:
- building the endorsement structure, said building step comprising the sub-steps of:
   - requiring the authentication of a first officer,
   - displaying the public data on a first officer's interface,
   - offering an endorsement choice to the first officer,
   - if the first officer endorses the displayed data, setting a one-way operational state machine to a first state,
   - computing a signature using the shared external signature secret key from at least the public data and the operational state,
   - constructing the endorsement structure from at least the public data, the operational state and the signature,
- updating and finalizing the endorsement structure, comprising the sub-steps of:
   - requiring the authentication of a last officer,
   - displaying the public data on a last officer's interface,
   - verifying the signature stored in the endorsement structure using the shared external signature secret key,
   - offering an endorsement choice to the last officer,
   - if the last officer endorses the displayed data, upgrading the one-way operational state machine to a complete/final state,
   - compute a new signature using the shared external signature key from at least the public data and the operational state,
   - finalizing the endorsement structure with the newly computed signature.

The invention enables physical person to access public data and to endorse them in a reasoned and efficient way. It directly offers security officers a simple way to endorse a certificate while ensuring integrity of the endorsement. The use of a state machine in combination with a signature calculated from the certificate and the state of the state machine is simple to implement and offers the necessary tracking of the succession of physical officers with integrity and easiness.

According to an advantageous embodiment, the method further includes at least an intermediate step of, for at least a second officer, updating the endorsement structure, comprising the sub-steps of:
- requiring the authentication of the second officer,
- displaying the public data on a second officer's interface,
- verifying the signature stored in the endorsement structure using the shared external signature secret key,
- offering an endorsement choice to the second officer,
- if the second officer endorses the displayed data, upgrading the one-way operational state machine to an intermediate state,
- compute a new signature using the shared external signature key from at least the public data and the upgraded operational state,
- updating the endorsement structure with the newly computed signature.

Such an intermediate step reinforces the trust by enabling to add an officer to endorse the public data. The principle of the endorsement being similar to the ones used in the first building step and the last finalizing step, such intermediate steps are easy to implement.

According to various applications, public data are chosen among the following kinds of data: certificates, usage Period/Count/Level for a dedicated action, Access/Usage rights on specific resources, public data intended to be used in a sensitive process.

Such kind of data can be included alone or in combination within an endorsement structure of the invention. Thus, a certificate and an associated usage period can be included in public data. It is here understood that the invention is largely applicable for any public data that can be used in a sensitive process: time limits, trust periods, authorizations to generate keys, access limitation to the system, usage count and limit etc...

According to an advantageous feature, the method includes a further sub-step of inserting an officer's identifier in the endorsement structure, the signature sub-step being performed from data including said officer's identifier.

The insertion of the officer's identifier enables to precisely follow the successive endorsement. It is useful when no specific order is requested for officers during the endorsement process. The inclusion of the officer's identifier in the calculation of the signature enables to guarantee the integrity of these identifiers all along the process.

According to a preferred embodiment, comprising a sub-step of inserting a check value of the external signature key in the endorsement structure, the signature sub-step being performed from data including said check value.

This embodiment enables to check rapidly that the right key is used and has not been changed before the signature check.

According to a particular feature, officers are authentified by password or token or both.

Such authentication means are adapted to the invention while not excluding other authentication means.

According to a specific feature, the display sub-step comprises the display of only relevant part and/or digest of the public data.

This feature is adapted when large amount of data are included in the public data. It enables the officer to endorse the public data while inspecting a digest representative of the whole set of data and while not having to display the whole set.

In a particular embodiment, the method included a sub-step of displaying the operational state.

This feature enables the successive officer to follow the advancement of the endorsement process and to check its rightness if a given order is requested for the endorsement process.

In a preferred implementation, the stored external signature secret key is protected in a Hardware Security Module or in a token or by software.

The protection of the external signature secret key is central in the security of the invention.

In a particular embodiment, the operational state machine is dedicated to receive the endorsements of officers in a specific order.

This embodiment enables to fully control the endorsement process but can generate situations of blockage in case an officer is not available.

In another particular embodiment, the operational state machine is such that it switches to the complete state once a given number N of officers in a pool of M (M≥N) officers have endorsed the endorsement structure.

This embodiment is advantageous to circumvent the above mentioned situation.

Advantageously, the operational state machine is such that it enables an officer to prevent the endorsement structure to switch to the complete state.

This embodiment enables any officer that wants, at any stage of the endorsement process, to avoid the endorsement structure to be finalized in a complete state to do so. This embodiment is indeed useful in case no specific order is required for officers' endorsements.

The present invention also relates to a system comprising means to execute the method according to the invention.

Advantageously, the system of the invention comprises a Hardware Security Module storing the endorsement structure, the external signature key, said HSM being associated with a trusted terminal carrying an interface for use by officers.

This corresponds to the preferred application of the invention.

The invention also relates to an endorsement structure including public data linked to sensitive actions to be performed on a system authorizing such sensitive actions only if public data are endorsed by physical officers, said structure including at least:
- public data,
- an operational state machine dedicated to be upgraded as an officer endorses the public data,
- a signature computed by the officer that lastly endorsed the public data using the shared external signature secret key from at least the public data and the operational state.

Such an endorsement structure can be accessible on a Hardware Security Module or can be transferred from officer's terminal to officer's terminal. It is updated at each endorsement until the endorsement by the last officer.

According to an advantageous feature, said endorsement structure further includes at least the identifier of the officer that lastly endorsed the public data included in signed data.

The inclusion of the identifier of the officer that lastly endorses the public data enables to track the endorsement process. Advantageously, identifiers of all successive officers are included in the endorsement structure in order to follow the progression of the endorsement process.

According to an advantageous implementation, the endorsement structure is stored in a Hardware Security Module of a Key Management System and intended to be subsequently accessed by subsequent officers for endorsement.

This implementation corresponds to the storage of the endorsement structure within a Hardware Security Module for successive endorsement and for use inside an associated Key Management System. Nevertheless, it has to be noted that the endorsement structure is already protected by itself in term of integrity thanks to the signature performed using the external signature secret key. It can thus be stored in unsecure zones without prejudice.

According to another implementation, the endorsement structure is dedicated to be transferred from one officer to a next officer for subsequent endorsement before being stored for final user's usage.

In this implementation, the endorsement structure is adapted to be transferred from a terminal to another one.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents an example of environment in which the present invention is advantageously implemented;
- Figure 2 shows a flowchart of a method of the invention according to an advantageous embodiment;
- Figure 3 schematically shows an endorsement structure according to the invention; and
- Figures 4a, 4b, 4c show three successive endorsement structures as obtained along the execution of the method of the invention in a preferred embodiment.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described. Moreover, when an action is said to be performed by a device, it is in fact executed by a microprocessor in this device controlled by instruction codes recorded in a program memory on the said device.

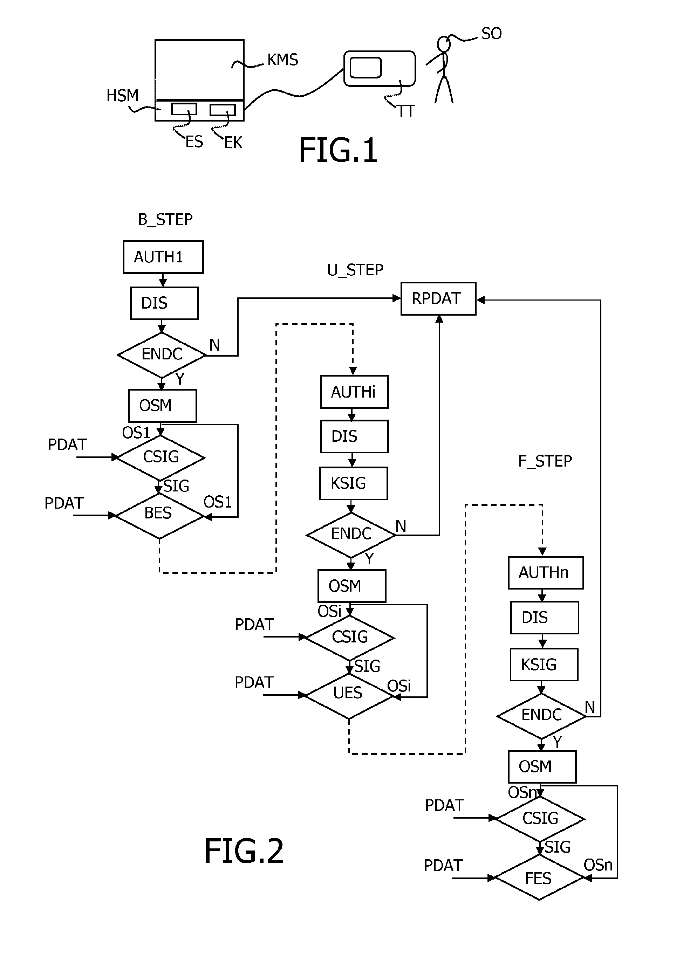

FIG. 1 schematically represents an environment in which the invention is advantageously implemented. This environment concerns the field of Key Management System KMS. Such systems are classically associated with a Hardware Security Module HSM. In the exemplary environment, it is possible for a security officer SO to connect to the HSM through a trusted terminal TT. In the shown illustrative embodiment, the trusted terminal TT is preferably dedicated to the connection of security officers SO to the HSM but a more generic terminal could be used as far as it offers a satisfying level of security.

In the exemplary embodiment, the HSM contains secret keys. Such secret keys are sometimes needed to be exported, typically towards another KMS/HSM. Generally, in such cases, secret keys are encrypted using asymmetric cryptography. There is today a need to collect the endorsement of physical persons before using a set of asymmetric in such a context. The endorsement of the corresponding certificate is thus today expected.

The invention enables to collect such endorsement emanating from physical persons in a reasoned, computerized, efficient and secured way. Such endorsement can also be expected in relation with any other public data that could need to be checked and endorsed by physical person SO before being available for use. For example it can be an authorization to generate a given number of keys or a time limit for access right etc. Such data are public and can be accessed without prejudice but the corresponding system granting the rights is conceived in order to grant such rights or to perform sensitive actions only if an endorsement structure ES of the invention is in a complete state.

In the exemplary embodiment presented in figure 1, the endorsement structure ES is stored in the HSM and the HSM is conceived to use the set of keys associated with a given certificate to encrypt a secret key only if the certificate was previously endorsed by physical persons SO. Thus, with the invention, the certificate would be usable by the HSM only if a complete state would be present in an endorsement structure of the invention wherein the certificate is stored. In this embodiment, the endorsement structure ES is accessible through the trusted terminal TT connected to the HSM.

To access the endorsement structure ES, a security officer SO is required to authenticate him/herself. This authentication can be implemented through various means like a smart card having a PIN code, a specific token, a fingerprint, a password, a session opening... or a combination of several of the above authentication ways. This authentication enables the officer SO to have access to an external signature key EK necessary for the implementation of the invention. In the example shown on figure 1, the shared external key EK is stored in the HSM for successive access by security officers.

The authentication can be managed by the trusted terminal or by authentication devices connected to the trusted terminal, i.e. a personal badge reader.

In other embodiment, the endorsement structure ES is transferred from a terminal of a security officer to the terminal of another security officer for successive endorsement. Said transferable endorsement structure is here modified at each endorsement by a security officer. As the method of the invention uses an external signature secret key EK, in this case, it is necessary for the security officers to share this secret key. It can be implemented through the use of as many smart cards as security officers where the external signature secret key EK is stored or by other known means to distribute and store a secret key EK.

Figure 2 is a flowchart disclosing the method of the invention. In the example shown on figure 2, the method includes three main steps of building B_STEP the endorsement structure ES, of updating U_STEP the endorsement structure ES and of finalizing the endorsement structure F_STEP.

The first step B_STEP of building the endorsement structure ES comprises a first sub-step AUTH1 of authenticating a first security officer SO1.

Once the first security officer SO1 is authenticated, the trusted terminal TT displays public data PDAT to be endorsed in a sub-step DIS. Such public data can be previously designated to the security officer in order for him to find them in a directory or can be previously selected inside the HSM and displayed directly as the officer connects him/herself on the HSM.

Also, public data can be displayed in their integrality or only a part of the corresponding public data can be displayed or a digest of them. In any case, it is needed the security officers SO to be able to identify the public data and to check the correctness of them.

The trusted terminal TT subsequently or simultaneously with the display DIS of public data PDAT offers an endorsement choice ENDC. With the displayed data, the security officer checks that the certificate is the expected one by checking its integrality, or preferably, its common name or its fingerprint (hash) calculated over the certificate itself.

If the security officer SO1 does not approve the content of displayed public data PDAT, he/she can refuse to endorse the public data PDAT, e.g. a certificate. In this case, a step RPDAT launches actions corresponding to the refusal of the public data PDAT. It can be actions corresponding to an irrevocable refusal or a request for amending public data, updating them etc. Besides, if the public data are refused in this step, the endorsement structure is not created at the level of the first officer SO1 or is not updated at other levels. In both cases, the endorsement structure is not usable because it is not in final state.

If the security officer SO endorses the public data, here a certificate, an operational state machine OSM is set in a first operational state OS1. In the example shown, the operational state OS reveals the endorsement by the first officer SO1 and the endorsement has to be done in a given order of security officers, this order being previously determined.

Once the state machine is set to the first state OS1, this first state OS1 is provided to a sub-step CSIG, where a signature SIG is calculated using the external signature secret key from the public data PDAT and the operational state OS1 at least. Other data as a check value of the used external signature secret key, identifier of the officer, usage constraints data can also be integrated in data used for the calculation of the signature. In such a case all complementary data are provided to the sub-step CSIG with the public data PDAT.

It can be noted here that such data can displayed or not during the sub-step of displaying DIS.

Once the signature SIG is calculated an endorsement structure of the invention ES is built in a sub-step BES, with the public data, the signature and the current operational state that is transferred from sub-step OSM to the building sub-step BES (this transfer being represented by the second arrow from sub-step OSM). Here also, if complementary data are integrated in the method of the invention, these data are provided to the sub-step BES with the public data PDAT.

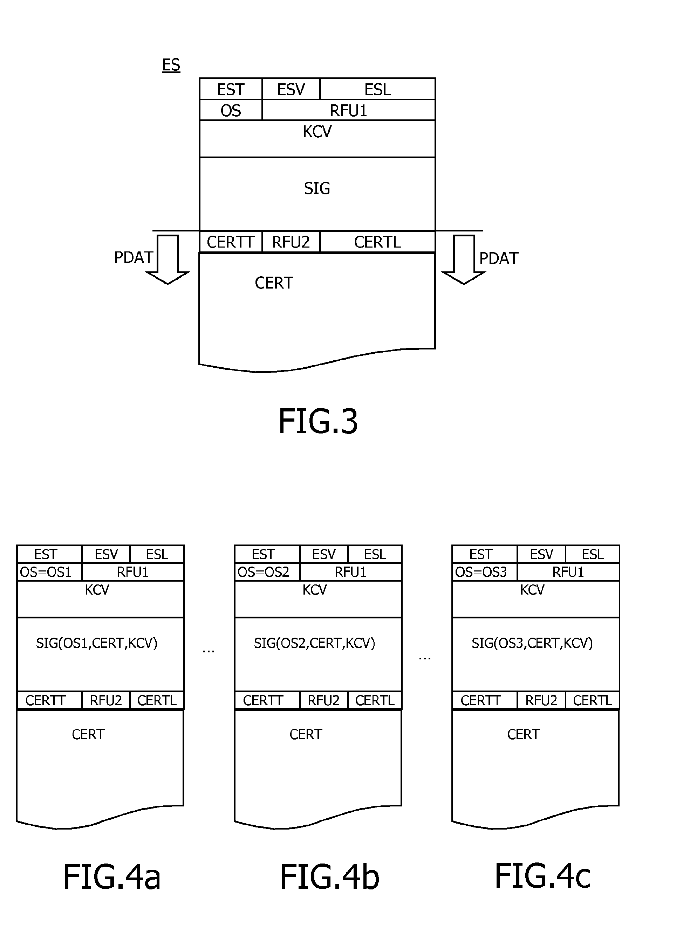

Figure 3 shows a preferred implementation of an endorsement structure ES of the invention that includes generic fields like a type of the structure EST used to identify the structure, a version of the structure ESV, a length of the structure ESL.

According to the invention, the endorsement structure ES further comprises an operational state OS successively upgraded each time the public data are endorsed by a security officer in the method of the invention. Reserve for future use RFU1 is classically implemented. The endorsement structure ES preferably includes a key check value KCV, typically a hash, calculated from the external signature secret key used in the method of the invention.

The endorsement structure further includes the computed signature SIG at the current operational state and public data PDAT. In the example given on figure 3, public data PDAT include a certificate type CERTT, a certificate length CERTL and the certificate CERT. Reserve for future use RFU2 is also classically implemented.

Additionally, the endorsement structure ES can also include use constraints like trust period, usage count etc. those public data being included in data used in the computation of the signature.

Identifiers of the security officer can also be inserted in the endorsement structure ES. It is particularly useful if no order is required for the succession of endorsements by officers. Otherwise, if an order is compulsory, the operational state enables to follow the successive endorsement without further data. In absence of an order, storing the officers' identifiers enables to keep a track of the identities of the endorsing officers while ensuring that all officers have signed. If an officer has not endorsed the public data, it is also easier to identify him/her and to remind him/her about the request.

Following the building step, the endorsement structure is thus as shown on figure 4a for an example of an endorsement structure carrying a certificate. It has an operational state set at a first state OS1 and a signature SIG calculated from OS1, the certificate CERT and key check value KCV.

While considering again figure 2, according to the method of the invention, after the building step B_STEP, an intermediate officer SOi is waited to initiate an update step U_STEP by further endorsing the public data PDAT. The invention enables as many intermediate successive officers as needed to endorse the public data. The minimum number of security officers is two, i.e. the first one and the last one who finalizes the structure. In this case, none intermediate step U_STEP is performed.

During the update step U_STEP, the intermediate officer (thus at least a second officer S02) once authenticated in a first sub-step AUTHi, with here for example i=2, is admitted, in a sub-step ENDC, to endorse or not the public data displayed in a sub-step DIS. In parallel, the signature stored in the endorsement structure ES is checked in a sub-step KSIG. This checking KSIG enables to verify the rightness of the operational state and the integrity of the public data and other data if available.

If a key check value KCV is available in the endorsement structure ES, this value has to be checked by re-calculating a check value from the available external signature secret key and comparing it to the one present in the endorsement structure ES. If not the same, it means that the key is not the same than the previously used one.

If the second officer endorses the displayed data, the operational state is upgraded to a subsequent operational state OSi in a sub-step OSM. In the invention, the operational state machine is one-way. Officers can thus be requested to connect in a specific order enabling to follow the process of endorsement Nevertheless it is noted that several one-way paths can be followed. It is particularly the case when there is no request in term of order for the successive officers. A pool of officers is determined in this case and the path is determined by the successive connections of the officers. It is nevertheless a one-way path forbidding any return or double endorsement. In the case of unordered endorsement, the endorsement structure will be finalized in case every officer from the pool has endorsed the public data. The operational state machine enables to track it.

In any case, the endorsement structure ES holds at least two operational states and, in general, several operational states from partial to complete.

Once the operational state is upgraded to OSi, here OS2, a new signature SIG is calculated from the public data and the operational state OSi. The endorsement structure ES is then updated in an updating sub-step UES with the public data PDAT, the operational state OS2 and the newly computed signature. Figure 4b shows an exemplary endorsement structure ES after the intermediary updating step U_STEP. It comprises an operational state set at a second state OS2 and a signature calculated from this state OS2, the certificate CERT and the key check value KCV.

Other intermediate update step(s) U-STEP can be inserted in the method of the invention before a finalization step F_STEP comprising a sub-step of authenticating AUTHn, here for example n=3, a last officer SOn, n=3, a sub-step DIS of displaying the public data or again a digest/part if them, a sub-step of checking KSIG the signature SIG present in the endorsement structure. Then the last officer SO3 is invited, in a sub-step ENDC, to endorse or not the displayed certificate/public data PDAT. Again, if a key check value was inserted in the endorsement structure, this value has to be checked.

In case of endorsement, the operational state machine is upgraded in a sub-step OSM, to a complete state OSn, here OS3. A new signature SIG is calculated in a sub-step CSIG. In a finalization sub-step FES, this signature SIG is inserted in the finalized endorsement structure for further check of integrity during subsequent use of the public data. The finalized endorsement structure ES thus comprises the public data PDAT, the complete operational state OS3 and the signature SIG. As shown on figure 4c, the signature is thus here computed from the complete state OS3, the certificate CERT (and its attributes) and the key check value KCV.

The certificate or any other type of public data included in the endorsement structure is thus endorsed. For the certificate, it means that it will be habilitated to be used in the transportation of secret keys. Any entity that needs to use the public data must verify that the operational state is in the complete state in the endorsement structure and that the signature is valid using the secret signature key. The invention thus ensures that the public data cannot be used in a concerned system until it has been trusted by at least two persons. The endorsement structure is stored as un unalterable structure. With the invention, when sharing the endorsement structure, the final user if confident as the certificate has been trusted by at least two physical persons. The invention does not require all security officers to be present at the same time.

In the above detailed description, reference is made to the accompanying drawings that show, by way of illustration, specific embodiments in which the invention may be practiced.

These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The above detailed description is, therefore, not to be taken in a limiting sense, and the scope of the present invention is defined only by the appended claims, appropriately interpreted, along with the full range of equivalents to which the claims are entitled.

In particular, the state machine may be conceived in order to switch to the complete state once a given number N of officers in a pool of M (M≥N) officers have endorsed the structure. The state machine can also be conceived in order enable any officer to put the structure in a state that prevents the endorsement structure to switch to the complete state whatever are the endorsements of other officers.

## Claims

1. Method to build, update and finalize an endorsement structure (ES) including public data (PDAT) linked to sensitive actions to be performed on a system (KMS) authorizing such sensitive actions only if public data are endorsed by physical officers (SO), said method using an external signature secret key (EK), said method comprising the steps of:
- building the endorsement structure (ES), said building step (B_STEP) comprising the sub-steps of:
- requiring (AUTH) the authentication of a first officer (SO1),
- displaying (DIS) the public data (PDAT) on a first officer's interface (TT),
- offering (ENDC) a endorsement choice to the first officer (SO1),
- if the first officer (SO1) endorses the displayed data, setting (OSM) a one-way operational state machine to a first state (OS1),
- computing (CSIG) a signature (SIG) using the shared external signature secret key (EK) from at least the public data (PDAT) and the operational state (OS1),
- constructing (BES) the endorsement structure (ES) from at least the public data (PDAT), the operational state (OS1) and the signature (SIG),
- updating and finalizing (F_STEP) the endorsement structure (ES), comprising the sub-steps of:
- requiring (AUTHn) the authentication of a last officer (SOn),
- displaying (DIS) the public data (PDAT) on a last officer's interface (TT),
- verifying (KSIG) the signature (SIG) stored in the endorsement structure (ES) using the shared external signature secret key (EK),
- offering (ENDC) an endorsement choice to the last officer (SOn),
- if the last officer (SOn) endorses the displayed data, upgrading the one-way operational state machine to a complete/final state (OSn),
- compute (CSIG) a new signature (SIG) using the shared external signature key (EK) from at least the public data (PDAT) and the operational state (OSn),
- finalizing (FES) the endorsement structure (ES) with the newly computed signature (SIG).

2. Method according to claim 1, including at least an intermediate step (U_STEP) of, for at least a second officer (SOi), updating the endorsement structure (ES), comprising the sub-steps of:
- requiring (AUTHi) the authentication of the second officer (SOi),
- displaying (DIS) the public data (PDAT) on a second officer's interface (TT),
- verifying (KSIG) the signature (SIG) stored in the endorsement structure (ES) using the shared external signature secret key (EK),
- offering (ENDC) an endorsement choice to the second officer (SOi),
- if the second officer (SOi) endorses the displayed data, upgrading the one-way operational state machine to an intermediate state (OSi),
- compute (CSIG) a new signature (SIG) using the shared external signature key (EK) from at least the public data (PDAT) and the upgraded operational state (OSi),
- updating (UES) the endorsement structure (ES) with the newly computed signature (SIG).

3. Method according to one of claims 1 and 2, wherein public data (PDAT) are chosen among the following kinds of data: certificates, usage Period/Count/Level for a dedicated action, Access/Usage rights on specific resources, public data intended to be used in a sensitive process.

4. Method according to one of the preceding claims, including a further sub-step of inserting an officer's identifier in the endorsement structure (ES), the signature sub-step (CSIG) being performed from data including said officer's identifier.

5. Method according to one of the preceding claims, comprising a sub-step of inserting a check value (KCV) of the external signature key (EK) in the endorsement structure (ES), the signature sub-step (CSIG) being performed from data including said check value (KCV).

6. Method according to one of the preceding claims, wherein the display sub-step (DIS) comprises the display of only relevant part and/or digest of the public data (PDAT).

7. Method according to one of the preceding claims, wherein the stored external signature secret key (EK) is protected in a Hardware Security Module (HSM) or in a token or by software.

8. Method according to one of the preceding claims, wherein the operational state machine (OS) is dedicated to receive the endorsements of officers (SO) in a specific order.

9. Method according to one of the claims 1 to 9, wherein the operational state machine (OS) is such that it switches to the complete state (OSn) once a given number N of officers (SO) in a pool of M (M≥N) officers (SO) have endorsed the endorsement structure (ES).

10. Method according to one of the preceding claims, wherein the operational state machine (OS) is such that it enables an officer (SO) to prevent the endorsement structure (ES) to switch to the complete state (OSn).

11. System comprising means to execute the method according to one of the preceding claims.

12. System according to claim 10, comprising a Hardware Security Module (HSM) storing the endorsement structure (ES), the external signature key (EK), said Hardware Security Module (HSM) being associated with a trusted terminal (TT) carrying an interface for use by officers (SO).

13. Endorsement structure (ES) including public data (PDAT) linked to sensitive actions to be performed on a system authorizing such sensitive actions only if public data (PDAT) are endorsed by physical officers (SO), said endorsement structure (ES) including at least:
- public data (PDAT: CERT, CERTT, CERTL),
- an operational state machine (OS) dedicated to be upgraded as an officer (SO) endorses the public data (PDAT),
- a signature (SIG) computed by the officer (SOi) that lastly endorsed the public data (PDAT) using the shared external signature secret key (EK) from at least the public data (PDAT) and the operational state (OSi).

14. Endorsement structure (ES) according to claim 12, wherein said endorsement structure (ES) further includes at least the identifier of the officer that lastly endorsed the public data (PDAT) included in signed data.

15. Endorsement structure (ES) according to one of claims 12 and 13, stored in a Hardware Security Module (HSM) of a Key Management System (KMS) and intended to be subsequently accessed by subsequent officers (SO) for endorsement.
